Europäisches Patentamt

European Patent Office

Office européen des brevets

(11) Publication number: **0 315 920**
**A2**

# (12) EUROPEAN PATENT APPLICATION

(21) Application number: 88118468.3

(22) Date of filing: 05.11.88

(51) Int. Cl.⁴: **C08G 18/68 , C08G 18/67 ,**
**C08F 283/00 , C09D 3/72**

(30) Priority: 10.11.87 US 119125
10.11.87 US 119124

(43) Date of publication of application:
**17.05.89 Bulletin 89/20**

(84) Designated Contracting States:
**DE ES FR GB IT**

(71) Applicant: PPG INDUSTRIES, INC.
**One PPG Place**
**Pittsburgh Pennsylvania 15272(US)**

(72) Inventor: **Eslinger, Delano Ray**
**R.D. 3 Box 150 Dwellington Drive**
**Valencia Pennsylvania 16059(US)**
Inventor: **Ambrose, Ronald Ruthvoyne**
**4312 Winchester Drive**
**Allison Park Pennsylvania 15101(US)**
Inventor: **Seiner, Jerome Allan**
**5415 Plainfield Street**
**Pittsburgh Pennsylvania 15217(US)**

(74) Representative: **Sternagel, Hans-Günther, Dr.**
**et al**
**Patentanwälte Dr. Michael Hann Dr. H.-G.**
**Sternagel Sander Aue 30**
**D-5060 Bergisch Gladbach 2(DE)**

(54) High solids coating compositions containing allylether-functional polyester-urethanes and reactive diluents, and processes for making and using the same.

(57) Disclosed herein is a high solids coating composition containing allylether-functional unsaturated polyester-urethanes in combination with reactive diluents and a free radical catalyst.

EP 0 315 920 A2

# HIGH SOLIDS COATING COMPOSITIONS CONTAINING ALLYLETHER-FUNCTIONAL POLYESTER-URETHANES AND REACTIVE DILUENTS

## Background of the Invention

### Field of the Invention

The present invention relates to an improved low-temperature curable high solids coating compositions containing allylether-functional unsaturated polyester-urethanes and reactive diluents.

### Brief Description of the Prior Art

In a number of coating applications, low-temperature curable compositions are often desirable, especially over thermally-sensitive substrates such as plastics and woods. Particularly desirable are high solids compositions because they contain reduced quantities of volatile organic compounds (VOC).

A class of the art-known low-temperature curable compositions are two-package compositions containing, respectively, (1) isocyanate curing agents and active hydrogen-containing materials; (2) epoxy resins with amine or polyamide curing agents, and (3) unsaturated polyesters cured by the addition of organic hydroperoxides and activators.

Another class of low-temperature curable compositions are those containing alkyds or modified alkyds. Illustratively, U.S. Patent 4,261,872 discloses the use of unsaturated acid esters of a glycol monodicyclopentadienyl ether reactive monomers in combination with alkyds. U.S. Patent 4,624,869 discloses the use of low molecular weight unsaturated polyesters or unsaturated polyester-urethanes in a blend with alkyds. U.S. Patent 4,293,461 discloses unsaturated condensates of alkoxymethylmelamines, allylic alcohols, and acrylamides as useful modifiers for alkyds.

Yet, another class of low-temperature curable compositions are those containing allylic groups. Illustratively, U.S. Patent 4,520,184 discloses compositions comprising polyacryl mcnomers and polyetherenes selected from the group consisting of oligomers of allyl glycidyl ethers. U.S. Patent 4,590,101 discloses cured polymers in which a mixture of poly(alpha)beta-ethylenically unsaturated oligomers and polyallyloxy activator compounds are employed.

U.S. Patent 4,004,041, which is somewhat related, discloses allylether-containing polyester-urethanes which can be derived from isophorone diisocyanates only. Also, the polyurethanes are of such a nature that makes them soluble in solvents with Kauri-Butanol (KB) values of less than 40.

In commonly assigned U.S. Patent application Serial No.     , filed even date, there is disclosed a novel low-temperature curable composition comprising allylether-functional unsaturated polyester-urethanes. By the present invention, these polyester-urethanes are combined with reactive diluents to provide yet another type of low-temperature curable high solids coating compositions.

## Summary of the Invention

In accordance with the foregoing, the present invention encompasses a high solids coating composition comprising: (1) an allylether-functional unsaturated polyester-urethane which is a reaction product of: (a) an essentially linear acid or hydroxy functional unsaturated polyester which can be prepared by reacting: (i) acid-functional material consisting essentially of a diacid, an anhydride or a mixture thereof, (ii) a hydroxy-functional material consisting essentially of a diol, (b) a diisocyanate, and (c) allylether functional active hydrogen-containing material; (2) an activated ethylenically unsaturated reactive diluent; and (3) a catalyst which is a free radical catalyst such as a peroxide or hydro peroxide, a cobalt salt or a mixture thereof.

An advantage of this invention is that the use of reactive diluents do not significantly degrade the physical properties of the allylether-containing polyester-urethane. Another advantage of this invention is that in the use of these coatings, there is obtained an increased cure response at threshold bake temperatures of about 130° F, thus "early" hardness of the coatings is resultant. Yet, another advantage is that a good cure response can be obtained without the need of peroxide or hydroperoxide initiators. Also, the coating compositions of this invention have good pot-lives and low VOC of about three pounds per gallon or less.

## Detailed Description of the Invention

In preparing the polyesters, linear diols and linear diacids and equivalents thereof are employed. The diols, useful herein, typically contain from about 2 to about 20 carbon atoms or higher and preferably from about 2 to about 14 carbon atoms. Non-limiting examples of the diols are selected from the group consisting of 1,6-hexanediol; neopentyl glycol; 2,2,4-trimethyl-1,3-pentanediol; 1,4-butanediol; cyclohexanediol; 2,2-dimethyl-3-hydroxypropyl-2,2-dimethyl-3-hydroxy-propionate, and cyclohexanedimethanol. A non-limiting example of the equivalent of the diols can be as follows. Diepoxides may be considered effectively as diols when reacted with diacids at temperatures below 100° C to produce equivalent linear polyesters. Monoepoxides may be considered effectively as diols when reacted at temperatures above 100° C to produce equivalent linear polyesters.

The diacids, or equivalents thereof, typically contain from about 2 to about 20 carbon atoms or higher and preferably about 2 to about 14 carbon atoms. Non-limiting examples of the diacids are selected from the group consisting of maleic anhydride, fumaric acid, tetrahydrophthalic anhydride, hexahydrophthalic anhydride, methylhexahydrophthalic anhydride, chlorendic anhydride, phthalic acid, isophthalic acid, terephthalic acid, dimethyl 1,4-cyclohexane dicarboxylate, and a mixture thereof. Typically, a mixture of the unsaturated diacids and the anhydrides are employed.

Reaction of the diols and diacids can be conducted as follows. Reaction temperatures of about 150 to 200° C and preferably about 160 to 180° C can be employed over a period of time until an acid value of about 10mg KOH/gm is attained. In accordance with this invention, it is recommended that necessary steps be taken to preserve the linearity of the resultant polyester since side reactions leading to branched polyesters often occur with unsaturated diacids useful herein. If these side reactions are allowed to occur, unwanted gelled products may be obtained in the subsequent urethane formation step. Furthermore, these side reactions reduce the amount of the active double bonds on the polymer backbone which are required for the film-forming via crosslinking reactions with allylether groups described herein. It is, therefore, often necessary to employ, in small by effective amounts, certain inhibitors, such as di-t-butyl-p-cresol, hydroquinone or benzoquinone, in order to minimize the formation of unwanted branched products. In addition, lower reaction temperatures with azeotropic distillation techniques can be employed. The resultant acid or hydroxy functional unsaturated polyester is said to be essentially linear in that it is essentially difunctional. Typically, the starting reactants also consist essentially of difunctional materials.

The ratio of the reactants can be from 1:1.1 to 3 and preferably from 1:1.2 to 2 of polyacid to polyol, or polyol to acid. The reaction is usually conducted in a solvent and in the presence of a catalyst. Examples of the solvents, useful herein, are the higher boiling aromatic solvents such as xylene and toluene. Examples of the catalysts, useful herein, are butyl stannoic acid and dibutylti oxide.

Isocyanates are reacted with the acid or hydroxy-functional polyesters to form isocyanate prepolymers. The isocyanates are preferably diisocyanates selected from the group consisting of isophorone diisocyanate, trimethylhexamethylene diisocyanate, 1,6-hexamethylene diisocyanate, 4,4'-methylene-bis-(cyclohexyl isocyanate), toluene diisocyanate, isophorone diisocyanate, an isocyanurate from isophorone isocyanate, a biuret from 1,6-hexamethylene diisocyanate, and a "$C_{36}$-diisocyanate", available from Henkel Chemical Company as a dimer diisocyanate.

The ratio of reactants is about 1.2 to 3:1 and preferably about 1.5 to 2:1 of the isocyanate to the hydroxy or acid group of the polyester. The reaction conditions are as follows: Reaction temperatures of about 60 to 110° C and preferably about 80 to 90° C are employed over a period of about two to six hours. Solvents, such as n-butylacetate, methyl isobutyl ketone, and methyl amyl ketone, can be employed. Catalysts, such as dibutyltindilaurate and dibutyltindiacetate, can be employed.

The resultant isocyanate prepolymer is ungelled. It is noteworthy that a wide variety of isocyanates can be employed herein without encountering gelation. This constitutes a distinct advantage over art-related compositions which employ a limited variety of isocyanate types such as isophorone diisocyanate.

Allylether-functional active hydrogen-containing materials, such as hydroxy-functional allylethers, are reacted with the isocyanate prepolymer to produce the products of this invention. The ratio of the reactants is such that all or virtually all of the isocyanate groups are reacted. Typically, a ratio of 1:1 isocyanate to hydroxyl groups are employed. A slight excess of hydroxyl groups is often desirable in order to ensure there are no residual isocyanate groups.

Preferably, a hydroxy-functional allylether containing no more than one hydroxyl group per molecule (monohydroxy allylether) is employed in order to avoid formation of higher molecular weight products. The monohydroxy allylether is selected from the group consisting of trimethylolpropane diallylether, glycerol diallylether, and the like. It is, however, of note that in commercial grades, the mono-hydroxy allylethers usually have present therewith, at low concentrations, higher hydroxy-functional allylethers such as trimethylolpropane monoallylether, pentaerythritol diallylether, glycerol monoallylether and the like.

Generally, it should be noted that while the reactants described hereinabove are of low functionality, relatively higher functional reactants can be used, provided that their use thereof does not result in gelation of the products or the final polyurethanes. Higher functional reactants can be employed in limited amounts, preferably in combination with the lower functional reactants.

The resultant allylether-functional unsaturated polyester-urethane is of low number average molecular weight. Typically, the number average molecular weight is from about 2,000 to 5,000 and preferably from about 2,500 to 3,500. Typically, the allylether-functional unsaturated polyester-urethane is ungelled and well suited to use in high solids coating compositions.

The allylether-functional unsaturated polyester-urethane is employed in amounts of about 40 to 90 and preferably about 40 to 60 percent by weight solids of the allylether-functional unsaturated polyester-urethane based on the total resin solids content.

In the practice of the invention, the allylether-functional polyester-urethanes can be used as pigment dispersing vehicles. Pigments, useful herein, can be titanium dioxide, iron oxides, silicas, barytes, and zeospheres. The pigment paste, prepared therewith, can be let down by thinning to the required resin solids content. The pigment paste may be let down with the allylether-functional polyester-urethanes of this invention or with other low molecular weight unsaturated reactive diluents. The molecular weight of the reactive diluent, useful herein, is usually about 1,000 number average based on the polystyrene standard.

The reactive diluents, useful herein, are characterized as monomeric or oligomeric materials preferably having activated unsaturation. Non-limiting examples thereof can be acrylated, methacrylated or allylic materials or the like. Illustrative examples thereof can be epoxy acrylates, urethane acrylates, acrylates of polyols, acrylates of cyclopentadiene and the like. Specific examples of useful reactive diluents can be dicyclopentenyl oxyethyl methacrylate; the reaction product of diethylene glycol and allylglycidyl ether; trimethylolpropane triacrylate and alkoxylated forms thereof such as ethoxylated or propoxylated forms thereof; unsaturated polyesters such as disclosed herein as Example 1C. The reactive diluents are usually present in amounts of about 10 to about 60 and preferably about 25 to about 50 percent by weight resin solids of the total composition.

Cure catalysts, such as free-radical catalysts, e.g., peroxides, hydroperoxides, and/or metal compounds, which are typically cobalt salts are employed in amounts sufficient to affect cure. Illustrative of the free radical catalysts, useful herein, are methyl ethyl ketone peroxide, cumene hydroperoxide, and t-butylhydroperoxide. Examples of the cobalt salts are cobalt acetate, cobalt octoate, cobalt naphthenate, and complex cobalt. It is a distinct feature of this invention that these coating compositions can be cured in the absence of free-radical catalysts such as peroxides or hydroperoxides. That is, the coatings can be cured with only metal compounds comprising cobalt salts as catalysts.

The coating composition may contain other additives, such as wetting agents, thixotropes, resinous adjuncts and the like, as is found in art-related high solids coating.

The high solids coating compositions can be applied by art-known conventional techniques, such as roll-coating, dip-coating, or spraying which is preferred. The applied coating can be cured under ambient conditions (room temperature) or at low temperature by forced drying. Under ambient conditions, the cure time to a tack-free state varies from about 4 to 36 hours and preferably from about 16 to 24 hours. In a prefered embodiment of the invention, the applied coating can be cured at temperatures of about 120° F for about 10 to 30 minutes to provide early hardness. By "early hardness" is meant that the dried or tack-free coating exhibits a pencil hardness of 4B or better, preferably 2B or better, at a dry film thickness of about 1.0 to 1.5 mils.

The coating continues to cure with improved hardness. The cured coating can attain a "final" hardness of about F to H pencil or higher after about three to seven days. The cured coating is not embrittled and thus has good direct impact resistance. The cured coating is solvent resistant in that it takes more than 100 double-rubs of methyl ethyl ketone to remove it. Additionally, the cured coating also has good adhesion.

These and other aspects of the invention are further illustrated by the following nonlimiting examples.

4

## EXAMPLE 1A

A linear unsaturated polyester polyol, useful herein, was prepared as follows:

| Ingredients | Parts by Weight (grams) | |
|---|---|---|
| 1,6-hexanediol | 2613 | |
| Fumaric Acid | 3557 | |
| Hexahydrophthalic anhydride | 524 | |
| Neopentyl glycol | 2303 | Charge A |
| Butyl stannoic acid | 4.5 | |
| Triphenyl phosphite | 4.5 | |
| Butyl Acetate | 869 | Charge B |

Charge A was introduced into a four-necked flask fitted with stirrer, condenser, nitrogen inlet and thermometer. The resulting mixture was heated in a nitrogen atmosphere to about 200°C with distillation of water to form the desired polyester. The esterification was monitored by acid value determination until an acid value of 10.7 was attained. The resultant mixture comprising polyester polyol was cooled and thinned with butyl acetate (Charge B) to 90 percent solids. The polyester polyol was used in Example 1B as follows.

## EXAMPLE 1B

An allylether-functional unsaturated polyester-urethane was prepared as follows:

| Ingredients | Parts by Weight (grams) | |
|---|---|---|
| Polyester polyol of Example 1A | 1017 | |
| MONDUR TD-80[1] | 356 | Charge A |
| Butyl acetate | 216 | |
| Trimethylolpropane diallylether | 319 | |
| Dibutyltindilaurate | .02 | Charge B |
| Butyl acetate | 363 | |

[1] Toluene diisocyanate available from Mobay Chemical Company.

The polyester polyol was added slowly to a MONDUR TD-80 solution in butyl acetate with a resulting exotherm to 103°C. The resulting mixture (Charge A) was allowed to cool to 90°C and held at this temperature until a constant isocyanate equivalent weight of 1,065 was attained. The mixture was cooled to 80°C and Charge B was added. The resultant mixture was held at 80°C to react out all the isocyanate groups. An additional 20 grams of trimethylolpropane diallylether was required to react out all of the isocyanate groups. The final product was evaluated in the coating formulation of Example 1D, as follows.

## EXAMPLE 1C

A reactive diluent comprising allylether-functional unsaturated polyester was prepared as follows:

5

| Ingredients | Parts by Weight (grams) |
|---|---|
| Phthalic anhydride | 14.8 |
| Maleic anhydride | 382 |
| Diethylene glycol | 222 |
| Xylene | 199 |
| Trimethylolpropane diallylether | 900 |

Phthalic anhydride, maleic anhydride, diethylene glycol, and xylene were charged into a three-liter round bottom flask which was equipped with a mechanical stirrer, a thermometer, and a condenser. The mixture was heated to about 60°C to make a solution. IONOL 2,6-di-t-p-cresol (available from Shell Chemical Company) (0.04 grams) was added to the mixture, and was stirred at about 90 to 95°C for 4.5 hours. The initial exothermic reaction was controlled by air-cooling of the reaction flask. Trimethylolpropane diallylether, IONOL (0.03 grams), and butylstannoic acid (0.91 grams) were added in one portion to the mixture. The resulting homogeneous mixture was then heated to about 160 to 170°C with a positive nitrogen current and water generated from the condensation reaction was azeotropically removed with xylene. The mixture was stirred at reflux temperature until it attained an acid value of 20.06 KOHmg/g. The mixture was analyzed and found to contain a polyester having $M_{(N)}$ of 730-750 and polydispersity of 2.5-2.6. The polyester was used in Example 1D as follows.

## EXAMPLE 1D

A coating composition of the invention was prepared as follows:

| Ingredients | Weight | Resin Solids | Pigment Solids |
|---|---|---|---|
| The polyester-urethane of Example 1B | 57.1 | 40 | - |
| Aromatic 100[1] | 35 | - | - |
| PM Acetate[2] | 22 | - | - |
| xylene | 10 | - | - |
| Neosperse 657[3] | 1 | 0.7 | - |
| Lecithin | 2 | 2 | - |
| Zinc octoate - (18%) | 1.3 | 1.05 | - |
| Bentone 34[4] | 1 | 1 | - |
| Mekon wax[5] | 3 | 3 | - |
| Titanium dioxide | 84 | - | 84 |
| Zeospheres 400[6] | 78 | - | 78 |
| Barytes[7] | 78 | - | 78 |
| | 372.4 | 47.75 | 240 |

[1] Aromatic solvent available from Exxon Corporation.
[2] Propylene glycol monoethylether available from Dow Chemical Company.
[3] A wetting agent available from Tennaco Chemicals.
[4] Available from Petrolite Corporation.
[5] A thixotropic agent available from NL Industries, Inc.
[6] Ceramic microspheres available from Zeelan Industries, Inc.
[7] Barium sulfate.

The above ingredients were ground to a Hegman Scale of 6 and then let down with the following ingredients in the order listed below.

| Let-down | | Parts by Weight | | Pigment Solids |
|---|---|---|---|---|
| Ingredients | | (grams) | Resin Solids | |
| Unsaturated polyester (of Example 1C) | | 48.2 | 40 | - |
| Santolink XI-100[8] | | 20 | 20 | - |
| Triethylchlorthoformate | | 2 | - | - |
| Diethyloxalate | | 1 | - | - |
| Silicone surfactant[9] (0.48% DC-200 in xylene) | | 2 | - | - |
| Xylene | | 12.1 | - | - |
| | | 457.7 | 107.75 | 240 |

[8] A reactive diluent.

[9] Available from Dow Corning Company.

Having let down the pigment paste, a catalyst was added as follows:

| Catalyst | | | | |
|---|---|---|---|---|
| Cobalt octoate (12% cobalt) | | 0.4 | 0.25 | - |
| | | 458.1 | 108.00 | 240 |

The above formulation was spray applied on a "Bonderite 1000" steel panels and baked for 15 minutes at 150° F. The coated panels were initially tack free and mar-resistant and after 10 days gave the following properties.

Performance Data

| 10-Day Data | |
|---|---|
| Pencil hardness | 6H |
| 3 double-rubs acetone | very slight mar |
| 50 double-rubs of 1,1,1-trichloroethane | good |
| Direct Impact | 160 inch-pounds |
| Reverse Impact | less than 5 inch-pounds |
| Cross Hatch adhesion | 98% of the film was not removed |

<u>EXAMPLE 2A</u>

This example further illustrates the unsaturated polyester polyols which are useful herein.

| Ingredients | Parts by Weight (grams) |
|---|---|
| 1,6-hexanediol | 4697 |
| Fumaric acid | 6394 |
| Hexahydrophthalic anhydride | 525 |
| Neopentyl glycol | 4140 |
| Butyl stannoic acid | 8 |
| Triphenyl phosphite | 8 |
| IONOL | 1.6 |
| Xylene | 808 |

The materials were charged into a four-necked flask fitted with stirrer, nitrogen inlet, thermometer, and condenser. A Dean Stark trap was attached to the condenser for azeotropic distillation. The mixture was heated in a nitrogen atmosphere to about 170°C with the distillation of water to form the desired polyester. The esterification was monitored by acid value determinations until an acid value of 10.5 KOHmg/gm was attained. The polyester polyol was used in Example 2B as follows:

### EXAMPLE 2B

An unsaturated polyester-urethane was prepared as follows:

| Ingredients | Parts by Weight (grams) | |
|---|---|---|
| Polyester polyol of Example 2A | 5441 | |
| Trimethylhexamethylene diisocyanate (TMDI) | 2431 | Charge A |
| Butyl acetate | 1628 | |
| Trimethylolpropane diallylether | 1454 | |
| Dibutyltindilaurate | 0.12 | Charge B |
| Butyl acetate | 1118 | |

The polyester polyol was added slowly to a TMDI solution in butyl acetate with a resulting exotherm to about 70°C. The mixture (Charge A) was heated to about 90°C and held at this temperature until a constant isocyanate equivalent weight of about 1,398 was attained. Charge B was added and the resultant mixture was held at 80°C until all the isocyanate groups had reacted. The final product was evaluated in the coating formulation of Example 2D.

### EXAMPLE 2C

A reactive diluent comprising allylether-functional unsaturated polyester was prepared as follows:

8

| Ingredients | Parts by Weight (grams) |
|---|---|
| Phthalic anhydride | 60.6 |
| Maleic anhydride | 745 |
| Diethylene glycol | 445 |
| Xylene | 300 |
| Trimethylolpropane diallylether | 1790 |

This polyester was prepared in essentially the same manner as described for Example 1C and attained an acid value of 15.3 KOHmg/gm and G+ (Gardner-Holdt) viscosity.

## EXAMPLE 2D

A coating composition comprising the allylether-functional polyester-urethane was prepared as follows:

| Grind | Ingredients | Parts by Weight | | Pigment Solids |
|---|---|---|---|---|
| | | (grams) | Resin Solids | |
| | Polyester polyol of Example 2B | 53.3 | 40 | - |
| | Aromatic 100 | 32.25 | - | - |
| | PM Acetate | 32.25 | - | - |
| | Neosperse 657 | 1 | 0.7 | - |
| | Lecithin | 1 | 1 | - |
| | Zinc octoate (18%) | 0.5 | 0.4 | - |
| | Mekon wax | 3 | 3 | - |
| | Carbon black raven 410 | 10 | - | 10 |
| | Zeospheres 400 | 50 | - | 50 |
| | Silica | 35 | - | 35 |
| | Pergopak M3[1] | 10 | - | 10 |
| | | 228.3 | 45.1 | 105 |

[1] Urea formadlehyde organic pigment available from Ciba-Geigy Corporation.

The above ingredients were ground to a Hegman Scale of 6 and then let down as follows:

| Let-down | | | | |
|---|---|---|---|---|
| | Polyester polyol of Example 2C | 74.6 | 60 | - |
| | DC-200 silicone (0.48%) | 1 | - | - |
| | Xylene | 16.8 | - | - |
| | | 320.7 | 105.1 | 105 |
| Catalyst | | | | |
| | Cobalt octoate (12%) | 0.6 | 0.3 | - |
| | | 321.3 | 105.4 | 105 |

The resultant coating was spray applied to a "Bonderite 1000" treated steel substrate and baked at 180° F for 30 minutes and then evaluated with the following results.

Early hardness (at 1.0 mil) was F pencil. After seven days, final hardness was 5H pencil. Greater than 100 methyl ethyl ketone double-rubs were required to remove the coating. Greater than 80 inch-pounds direct impact was exhibited and 60° gloss was 4.

## EXAMPLE 3

Coating compositions of the invention were prepared in essentially the same manner as disclosed in Example 2D.

| Grind | Ingredients | Parts by Weight | | Pigment |
|---|---|---|---|---|
| | | (grams) | Resin Solids | Solids |
| | Polyester polyol of Example 2B | 53.3 | 40 | – |
| | Aromatic 100 | 13.5 | – | – |
| | PM acetate | 13.5 | – | – |
| | Neosperse 657 | 1 | 0.7 | – |
| | Lecithin | 1 | 1 | – |
| | 18% zinc octoate | 0.5 | 0.4 | – |
| | Mekon wax | 3 | 3 | – |
| | R902-titanium dioxide[1] | 90 | – | 90 |
| | | 175.8 | 45.1 | 90 |

1  Titanium dioxide pigment available from Dupont Corporation.

<u>Coating A</u>

<u>Let-down</u>

| | | | |
|---|---|---|---|
| Polyester polyol of Example 2C | 74.6 | 60 | – |
| Xylene | 24 | – | – |
| Hexyl acetate | 8.6 | – | – |
| Cobalt octoate (6%) | 0.8 | 0.5 | |
| | 283.8 | 105.6 | 90 |

<u>Coating B</u>

<u>Let-down</u>

| | | | |
|---|---|---|---|
| Polyester polyol of Example 2C | 49.6 | 40 | – |
| Santolink XI-100 | 20 | 20 | – |
| Xylene | 20 | – | – |
| Hexyl acetate | 13.6 | – | – |
| Cobalt octoate (6%) | 0.8 | 0.5 | |
| | 387.8 | 166.1 | 90 |

Performance Data:

The coatings were applied to a "Bonderite 1000" treated steel substrate and baked at 150°F for 15 minutes and evaluated with the following results:

| | A | B |
|---|---|---|
| Early hardness at 1.2 mils (pencil) | B | 2B |
| Final hardness (pencil) | 5H | 5H |
| No. 3 Zahn Cup viscosity (in seconds) | 14 | 14 |
| VOC (in pounds per gallons) | 3.0 | 3.0 |

<u>EXAMPLE 4A</u>

This example further illustrates the unsaturated polyester polyols useful herein.

| Ingredients | Parts by Weight (grams) |
|---|---|
| 1,6-hexanediol | 2487 |
| Fumaric acid | 3385 |
| Hexahydrophthalic anhydride | 499 |
| Neopentyl glycol | 2192 |
| Butyl stannoic acid | 4.5 |
| Triphenyl phosphite | 4.5 |
| IONOL | .9 |
| Xylene | 428 |

The polyester was prepared in a manner similar to Example 2A to an acid value of 10.8 KOHmg/gm.

EXAMPLE 4B

An allylether-functional polyester-urethane was prepared as follows:

| Ingredients | Parts by Weight (grams) | |
|---|---|---|
| Polyester polyol of Example 4A | 1515 | |
| [1]MONDUR TD-80 | 561 | Charge A |
| Butyl acetate | 424 | |
| Trimethylolpropane diallylether | 548 | |
| Dibutyltindilaurate | .04 | Charge B |
| Butyl acetate | 592 | |

[1] Toluene diisocyanate available from Mobay Chemical Company.

The polyester polyol was added slowly to a MONDUR-TD 80 solution in butyl acetate with a resulting exotherm to 101°C. The resulting mixture (Charge A) was allowed to cool to 90°C and held at this temperature until a constant isocyanate equivalent weight of 976 was attained. The mixture was cooled to 80°C and Charge B was added. The resultant mixture was held at 80°C to react out all the isocyanate groups. The final product was evaluated in the coating formulation of Example 4D.

EXAMPLE 4C

This example illustrates a reactive diluent comprising allylether-functional unsaturated polyester.

| Ingredients | Parts by Weight (grams) |
|---|---|
| Phthalic anhydride | 60 |
| Maleic anhydride | 745 |
| Diethylene glycol | 445 |
| Xylene | 300 |
| Trimethylolpropane diallylether | 1790 |

This polyester with an acid value of 20.0 KOHmg/gm and K[*] (Gardner-Holdt) viscosity was prepared in

12

essentially the same manner as described for Example 1C. The resultant product was analyzed and found to contain a polyester having a number average molecular weight $M_{(N)}$ of 580 and a polydispersity of 2.7.

## EXAMPLE 4D

| Grind | Ingredients | Parts by Weight | | Pigment Solids |
|---|---|---|---|---|
| | | (grams) | Resin Solids | |
| | Example 4B polymer | 57.1 | 40 | - |
| | Solvesso 100 | 34.15 | - | - |
| | PM acetate | 34.15 | - | - |
| | Neosperse 657 | 1 | 0.7 | - |
| | Lecithin | 1 | 1 | - |
| | Zinc octoate (18%) | 1.3 | 1.05 | - |
| | Mekon wax | 3 | 3 | - |
| | Bentone 34 | 1 | 1 | - |
| | Titanium dioxide | 84 | - | 84 |
| | Zeospheres | 78 | - | 78 |
| | Barytes | 78 | - | 78 |
| | | 372.7 | 46.75 | 240 |
| Let-down | | | | |
| | Example 4C polymer | 47.7 | 40 | - |
| | Santolink XI-100 | 20 | 20 | - |
| | Xylene | 3.6 | - | - |
| | | 444.0 | 106.75 | 240 |
| Catalyst | | | | |
| | Cobalt octoate (6%) | 0.8 | 0.4 | - |
| | | 444.8 | 107.15 | 240 |

Performance Data:

The resultant coating was spray applied to a "Bonderite 1000" treated steel substrate and baked at 150° F for 15 minutes with the following results.

Early hardness was B pencil at 1.2 mils. F pencil hardness was attained in 24 hours. No. 3 Zahn cup viscosity was 23 seconds. VOC was 2.6 pounds per gallon. Direct impact was greater than 80-inch-pounds.

More than 100 methyl ethyl ketone double-rubs were required to remove the coating.

## EXAMPLE 5A

An unsaturated polyester polyol was prepared as follows:

| Ingredients | Parts by Weight (grams) |
|---|---|
| Neopentyl glycol | 3976 |
| 1,6-hexanediol | 4511 |
| Hexahydrophthalic anhydride | 906 |
| Maleic anhydride | 1816 |
| Fumaric acid | 3991 |
| Triphenyl phosphite | 7.6 |
| Butyl stannoic acid | 7.6 |
| IONOL | 1.52 |
| Xylene | 800 |

The materials were charged into a four-necked flask fitted with stirrer, nitrogen inlet, thermometer and condenser. A Dean Stark trap was attached to the condenser for azeotropic distillation. The mixture was heated to about 180°C with the distillation of water to form the desired polyester. The esterification was monitored by acid value determinations until an acid value of 10.0 KOKmg/gm was attained. The polyester polyol was used in Example 5B as follows.

## EXAMPLE 5B

An allylether-functional polyester-urethane, useful herein, was prepared as follows.

| Ingredients | Parts by Weight (grams) |
|---|---|
| Polyester polyol of Example 5A | 6788 |
| Trimethylhexamethylene diisocyanate (TMDI) | 3033 |
| Butyl acetate | 2031 |
| Trimethylolpropane diallylether | 2538.9 |
| Dibutyltindilaurate | .12 |
| Butyl acetate | 1636.4 |

The polyester polyol was added slowly to a TMDI solution in butyl acetate and the mixture was heated slowly to 90°C. It was held at this temperature until a constant isocyanate equivalent weight of 1,119 was attained. At 80°C, Charge B was added. The resultant mixture was held at 80°C to react out all the isocyanate groups. The final product was evaluated in the coating formulation of Example 5D.

## EXAMPLE 5C

This example illustrates a reactive diluent comprising an allylether-functional unsaturated polyester.

14

| Ingredients | Parts by Weight | |
|---|---|---|
| | (pounds) | (kilograms) |
| Phthalic anhydride | 4.9 | 2.22 |
| Maleic anhydride | 126.0 | 57.15 |
| Diethylene glycol | 73.4 | 33.29 |
| Xylene | 49.4 | 22.41 |
| Trimethylolpropane diallylether | 295.8 | 134.17 |

Phthalic anhydride, maleic anhydride, diethylene glycol, and xylene were placed in a 35-gallon reactor and the reactor was heated to 90°C with nitrogen sparge. The mixture was stirred at 90 to 92°C for two hours and the reactor was cooled to 60°C. Trimethylolpropane diallylether, IONOL (12 grams) and butyl stannoic acid (134.4 grams) were added to the reactor which was then heated to reflux. The mixture was stirred at 176 to 188°C while the water was removed by azeotropic distillation until a polyester attained an acid value of 14.8 KOHmg/gm. The mixture was analyzed and found to contain a polyester having a number average molecular weight $M_{(N)}$ of 516 and polydispersity of 3.25.

## EXAMPLE 5D

The coating composition of this invention was prepared and evaluated in essentially the same manner as disclosed in Example 2D.

| Grind | Ingredients | Parts by Weight | | Pigment Solids |
|---|---|---|---|---|
| | | (grams) | Resin Solids | |
| | Resin of Example 5B | 68.25 | 51.2 | - |
| | PM acetate | 27.25 | - | - |
| | Mekon wax | 5.45 | 5.45 | - |
| | Shamrock SST-2[1] | 2.7 | 2.7 | - |
| | Shamrock S-232[1] | 4.15 | 4.15 | - |
| | Titanium dioxide | 51.2 | - | 51.2 |
| | Iron oxide | 0.1 | - | 0.1 |
| | Zeospheres 200 | 40.3 | - | 40.3 |
| | Barytes | 11.85 | - | 11.85 |
| | | 211.25 | 63.5 | 103.45 |
| Let-down | | | | |
| | Polyester of Example 5C | 34.1 | 28.3 | - |
| | QM-57 reactive monomer[2] | 20.5 | 20.5 | - |
| | | 265.85 | 112.3 | 103.45 |
| Catalyst/Reducer | | | | |
| | PM acetate | 27.25 | - | - |
| | Methylethyl ketoxime | 0.03 | - | - |
| | Cobalt octoate (6%) | 1.55 | 0.7 | - |
| | | 294.68 | 113.0 | 103.45 |

[1] A wax available from Shamrock Company.
[2] A reactive diluent available from Rohm & Haas Corporation.

The coating composition was spray applied to a "Bonderite 1000" pretreated steel substrate and baked at 150°F for 15 minutes with the following results.

Early hardness was 2B pencil at film thickness of 1.4 mils; F pencil hardness was attained overnight; 2H pencil hardness was attained after 10 days; 60° gloss was 21 and it took more than 100 methyl ethyl ketone double-rubs to remove coating.

EXAMPLE 6A

This example further illustrates the preparation of the unsaturated polyesters useful herein.

| Ingredients | Parts by Weight (grams) |
|---|---|
| 1,6-hexanediol | 2649 |
| Maleic anhydride | 3046 |
| Hexahydrophthalic anhydride | 531 |
| Neopentyl glycol | 2335 |
| Butyl stannoic acid | 4.3 |
| Triphenyl phosphite | 4.3 |
| IONOL | .86 |
| Xylene | 429 |

The above was introduced into a four-necked flask fitted with stirrer, nitrogen inlet, thermometer and condenser. A Dean Stark trap was attached to the condenser for azeotropic distillation. The mixture was heated under a nitrogen atmosphere to about 200°C with the distillation of water to form the desired polyester. The esterification was monitored by acid value determinations until an acid value of 10.8 was attained. The resultant polyester polyol was used in Example 6B as follows:

EXAMPLE 6B

This example further illustrates the allylether-functional unsaturated polyester-urethanes useful herein.

| Ingredients | Parts by Weight (grams) | |
|---|---|---|
| Isophorone diisocyanate | 708 | |
| Trimethylolpropane diallylether | 493 | Charge A |
| Butyl acetate | 400 | |
| Polyester polyol from Example 1A | 1499 | |
| | | Charge B |
| Butyl acetate | 400 | |
| Dibutyltindilaurate | .03 | |

The trimethylolpropane diallylether was added slowly to a solution of isophorone diisocyanate in butyl acetate. The mixture was heated slowly to 90°C until a constant isocyanate equivalent weight of 376 was attained. The reaction temperature was reduced to 80°C and Charge B was added. The reaction was allowed to continue at 80°C until a minimal amount of isocyanate groups remained, yielding an isocyanate equivalent weight of 27,834. The product was evaluated in Example 6D.

EXAMPLE 6C

This example further illustrates the unsaturated polyesters, useful herein, as reactive diluents.

16

| ingredients | Parts by Weight (kilograms) |
|---|---|
| Phthalic anhydride | 2.22 |
| Maleic anhydride | 57.15 |
| Diethylene glycol | 33.29 |
| Xylene | 22.41 |
| Trimethylolpropane diallylether | 134.17 |

Phthalic anhydride, maleic anhydride, diethylene glycol, and xylene were placed in a 35-gallon reactor and the reactor was heated to 90°C with nitrogen sparge. The mixture was stirred at 90 to 92°C for two hours and the reactor was cooled to 60°C. Trimethylolpropane diallylether, Ionol (12 grams), and butyl stannoic acid (134.4 grams) were added to the reactor which was then heated to reflux. The mixture was stirred at 176 to 188°C while the water was removed by azeotropic distillation until a polyester attained an acid value of 14.8 KOHmg/gm. The mixture was analyzed and found to contain a polyester having a number average molecular weight $M_{(N)}$ of 516 and polydispersity of 3.25.

## EXAMPLE 6D

This example also illustrates the coating compositions of this invention.

| Grind | Ingredients | Parts by Weight | | Pigment Solids |
|---|---|---|---|---|
| | | (grams) | Resin Solids | |
| | Resin of Example 6B | 66.7 | 50 | - |
| | PM acetate | 27.7 | - | - |
| | Mekon wax | 5.45 | 5.45 | - |
| | Shamrock SST-2 | 2.7 | 2.7 | - |
| | Shamrock S-232 | 4.15 | 4.15 | - |
| | Bentone 34 | 1 | 1 | - |
| | Titanium dioxide | 51.2 | - | 51.2 |
| | Iron oxide | 0.1 | - | 0.1 |
| | Zeospheres 200 | 40.3 | - | 40.3 |
| | Barytes | 11.85 | - | 11.85 |
| | | 211.15 | 63.3 | 103.45 |
| Let-down | | | | |
| | Resin of Example 6C | 33.3 | 30 | - |
| | QM-57 | 20 | 20 | - |
| | 1% Methylethyl ketoxime in PM acetate | 3 | - | - |
| | 48% DC-200 (in Xylene) | 1 | - | - |
| | PM acetate | 25.8 | - | - |
| | | 294.25 | 113.3 | 103.45 |
| Catalyst | | | | |
| | 6% Cobalt octoate | 1.5 | 0.75 | - |
| | | 295.75 | 114.05 | 103.45 |

The resultant coating was spray applied to a "Bonderite 1000" treated steel substrate and baked at 150°F for 15 minutes with the following results.

Early hardness was 2B pencil at 1.5 mils film thickness; 2H pencil hardness was attained after seven days and direct impact was 80 inch-pound. It took more than 100 methyl ethyl ketone double-rubs to remove the coating.

## Claims

1. A resinous composition of an allylether-functional unsaturated polyester-urethane which is prepared from:

(a) an essentially linear, acid- or hydroxy-functional unsaturated polyester,

(b) a diisocyanate, and

(c) allylether-functional active hydrogen-containing material.

2. The composition of Claim 1 wherein the polyester is a reaction product of:

(i) acid functional material consisting essentially of diacids, an anhydride or a mixture thereof;

(ii) a hydroxy-functional material consisting essentially of a diol.

3. The composition of Claim 2 wherein the diol is selected from the group consisting of 1,6-hexanediol; neopentyl glycol; 2,2,4-trimethyl-1,3-pentanediol; 1,4-butanediol; cyclohexanediol; cyclohexanedimethanol, 2 ,2-dimethyl-3-hydroxypropyl-2,2-dimethyl-3-hydroxypropionate, bisphenol A, and a mixture thereof.

4. The composition of Claim 2 wherein the diacid, anhydride, or the mixture thereof is selected from the group consisting of maleic acid, maleic anhydride, fumaric acid, tetrahydrophthalic anhydride, hexahydrophthalic anhydride, methylhexahydrophthalic anhydride, chlorendic anhydride, phthalic acid, isophthalic acid, terephthalic acid, dimethyl 1,4-cyclohexane dicarboxylate, and itaconic acid.

5. A composition of Claim 4 wherein the diacid, anhydride, or the mixture thereof is selected from the group consisting of tetrahydropthalic anhydride, maleic anhydride, maleic acid, fumaric acid or a mixture thereof.

6. The composition of Claim 1 wherein the diisocyanate is selected from the group consisting of isophorone diisocyanate, trimethylhexamethylene diisocyanate, 1,6-hexamethylene diisocyanate, 4,4′-methylene-bis-(cyclohexyl isocyanate) toluene diisocyanate, isophorone diisocyanate, an isocyanurate from isophorone isocyanate, and a biuret from 1,6-hexamethylene diisocyanate, and a dimer diisocyanate.

7. The composition of Claim 1 wherein the allylether-functional active hydrogen-containing material is a hydroxy-functional allylether selected from the group consisting of trimethylolpropane diallylether, trimethylolpropane monoallylether, glycerol diallylether, glycerol monoallylether, pentaerythritol diallylether and a mixture thereof.

8. The composition of Claim 7 wherein the hydroxy-functional allylether contains no more than one hydroxy group per molecule.

9. The composition of Claim 2 wherein the polyester is derived by reacting a diol with a diacid, anhydride or a mixture thereof in the presence of an inhibitor which is di-t-butyl-cresol, hydroquinone or benzoquinone.

10. A high solids coating composition comprising:

(1) an allylether-functional unsaturated polyester-urethane which is a reaction product of:

(a) an essentially linear, acid- or hydroxy-functional unsaturated polyester,

(b) a diisocyanate, and

(c) allylether functional active hydrogen-containing material.

(2) a reactive diluent comprising an activated unsaturation,

(3) a catalyst, which is a peroxide, hydroperoxide, a cobalt salt or a mixture thereof.

11. The composition of Claim 10 wherein the unsaturated polyester is a reaction product of:

(1) acid-functional material consisting essentially of diacids, an anhydride or a mixture thereof;

(2) a hydroxy-functional material consisting essentially of a diol.

12. The composition of Claim 11 wherein the diol is selected from the group consisting of 1,6-hexanediol; neopentyl glycol; 2,2,4-trimethyl-1,3-pentanediol; 2,2-dimethyl-3-hydroxypropyl, 1,4-butanediol; cyclohexanediol; cyclohexanedimethanol; and 2,2-dimethyl-3-hydroxypropionate.

13. The composition of Claim 12 wherein the diacid, anhydride, or the mixture thereof is selected from the group consisting of of maleic acid, maleic anhydride, tetrahydrophthalic anhydride, hexahydrophthalic anhydride, methylhexahydrophthalic anhydride, chlorendic anhydride, fumaric acid, phthalic acid, isophthalic acid, terephthalic acid, dimethyl 1,4-cyclohexane dicarboxylate, and itaconic acid or itaconic anhydride.

14. A composition of Claim 13 wherein the diacid, anhydride, or the mixture thereof contains maleic anhydride, maleic acid or fumaric acid or a mixture thereof.

18

15. The composition of Claim 10 wherein the diisocyanate is selected from the group consisting of isophorone diisocyanate, trimethylhexamethylene diisocyanate, 1,6-hexamethylene diisocyanate, 4,4'-methylene-bis-(cyclohexyl isocyanate) toluene diisocyanate, isophorone diisocyanate, an isocyanurate from isophorone isocyanate, and a biuret from 1,6-hexamethylene diisocyanate and a dimer diisocyanate.

16. The composition of Claim 10 wherein the allylether functional active hydrogen-containing material is selected from the group consisting of trimethylolpropane diallylether, trimethylol- propane monoallylether, glycerol diallylether, glycerol monoallylether, pentaerythritol diallylether and pentaerythritol triallylether.

17. The composition of Claim 22 wherein the hydroxy-functional allylether contains no more than one hydroxy group per molecule.

18. The composition of Claim 10 wherein the polymer of (a) is prepared by reacting a diol with a diacid, anhydride or a mixture thereof in the presence of an inhibitor which is di-t-butyl-p-cresol, hydroquinone, or benzoquinone.

19. The composition of Claim 10 wherein the reactive diluent is a monomeric or oligomeric material which is characterized by active unsaturation.

20. The composition of Claim 25 wherein the reactive diluent is dicyclopentenyl oxyethylmethacrylate, the reaction product of diethylene glycol and allylglycidyl ether, or trimethylolpropane triacrylate.

21. The composition of Claim 10 wherein the catalyst is a cobalt salt.

22. An article of matter which is prepared by applying to a substrate the curable composition of Claims10 - 21 and curing the composition at ambient or low temperatures.